# EUROPEAN PATENT APPLICATION

(11) **EP 3 040 111 A1**
(43) Date of publication of application: **06.07.2016**
(21) Application number: 13892414.7
(22) Date of filing: 05.12.2013
(51) Int. Cl.: B01D 63/02, B01D 65/02

(54) **SPIRAL AERATOR AND HOLLOW FIBER MEMBRANE MODULE HAVING SAME**

(30) Priority: 29.08.2013 KR 20130103081
(71) Applicant: Samsung SDI Co., Ltd., Yongin-si, Gyeonggi-do 17084 (KR); Lotte Chemical Corporation, Dongjak-gu Seoul 07071 (KR)
(72) Inventor: KIM, Jin Min, Uiwang-si Gyeonggi-do 437-711 (KR); PARK, Chang Min, Uiwang-si Gyeonggi-do 437-711 (KR)
(74) Representative: Michalski Hüttermann & Partner Patentanwälte mbB
(86) International application number: PCT/KR2013/011190
(87) International publication number: WO 2015/030310

(57) **Abstract**

Provided are: a hollow fiber membrane module comprising a hollow fiber membrane part positioned within a housing part and an air injection pipe part in which a plurality of pores for providing bubbles to the hollow fiber membrane part are formed along a pipe body, wherein the pipe body is wound so as to form a spiral shape; and an aerator including the air injection pipe part.

## Description

### [Technical Field]

Embodiments of the present disclosure relate to a water treatment technique, and more particularly, to a spiral aerator and a hollow fiber membrane module including the same.

### [Background Art]

A technology for selective separation of materials through membranes is used in water treatment such as water purification and treatment of industrial water, re-used water, waste water, and the like. In order to improve productivity of water purification, hollow fiber membranes are generally used as the membranes. A module or filtering apparatus using hollow fiber membranes may have a structure wherein a bundle of hollow fiber membranes is secured to a header. A hollow fiber membrane module may be operated in a dipping manner or in a compressive manner which can provide superior capabilities in treatment of produced water despite requirements for a separate system for fluid circulation.

For filtering or purification technology using such a hollow fiber membrane module, formation of a cake layer is proposed as a main technical issue as a method for preventing or removing contamination of surfaces of hollow fiber membranes. In order to remove such contamination, there is proposed a method of separating contaminants from hollow fiber membranes by supplying air to the hollow fiber membranes. Korean Patent Laid-open Publication No. 10-2012-0007946 discloses a high flux compressive membrane module purification apparatus, and Korean Patent Laid-open Publication No. 10-2011-0066234 discloses a hollow fiber membrane module. Korean Patent Laid-open Publication No. 10-2011-0039045 discloses a multilayer structure aerator and Korean Patent Laid-open Publication No. 10-2010-0092227 discloses a hollow fiber membrane module. Japanese Patent Laid-open Publication No. 2006-205119 discloses a dipping type membrane separation apparatus.

In order to achieve more efficient cleaning of hollow fiber membranes, various attempts have been made to further improve aeration effects of separating contaminants from the hollow fiber membranes by blowing air thereto.

### [Disclosure]

### [Technical Problem]

Embodiments of the present disclosure provide an aerator capable of more efficiently supplying air to a central portion of a hollow fiber membrane module, and a hollow fiber membrane module including the same.

### [Technical Solution]

In accordance with one aspect of the present disclosure, there is provided a hollow fiber membrane module including: a housing; a hollow fiber membrane part disposed inside the housing; and an air injection pipe having a plurality of pores formed along a pipe body thereof to supply bubbles to the hollow fiber membrane part, and the pipe body is wound in a spiral shape.

The hollow fiber membrane part may include a plurality of hollow fiber membranes, and the hollow fiber membranes may be connected to the header through a space between one portion of the pipe body wound in the spiral shape and another portion of the pipe body.

The hollow fiber membrane module may further include a transfer pipe transferring filtered water collected by a lower header portion to an upper header portion such that the filtered water is drawn into the upper header portion.

The air injection pipe may include the pipe body wound in the spiral shape about the transfer pipe.

The air injection pipe may include the pipe body wound in a spiral shape in which a distal end of the pipe body is placed at a central portion of the housing inside the housing and a height of the pipe body gradually decreases from the central portion of the housing to an outer circumference thereof.

In accordance with another aspect of the present disclosure, there is provided an aerator including an air injection pipe having a plurality of pores formed along a pipe body thereof to supply bubbles to a hollow fiber membrane part, wherein the pipe body is wound in a spiral shape. The air injection pipe may have a spiral shape in which a distal end of the pipe body of the air injection pipe is placed at a central portion of the housing inside the housing and a height of the pipe body gradually decreases from the central portion of the housing to an outer circumference thereof.

### [Advantageous Effects]

Embodiments of the present disclosure provide an aerator capable of more efficiently supplying air to a central portion of a hollow fiber membrane module, and a hollow fiber membrane module including the same.

### [Description of Drawings]

Figure 1 and Figure 2 are views illustrating a hollow fiber membrane module in accordance with one embodiment of the present disclosure.
Figure 3 to Figure 6 are views of an aerator applied to a hollow fiber membrane module in accordance with one embodiment of the present disclosure.

### [Best Mode]

Embodiments of the present disclosure will be described in more detail with reference to the accompanying drawings.

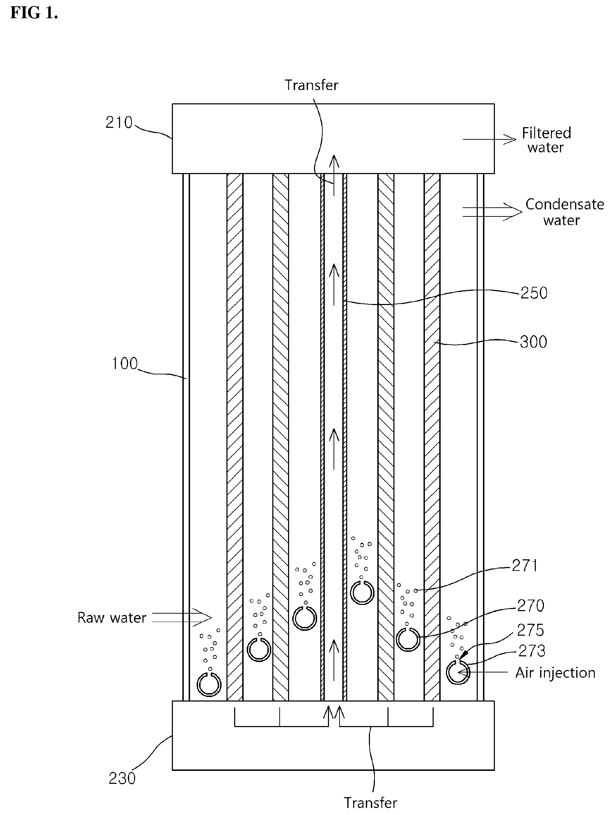

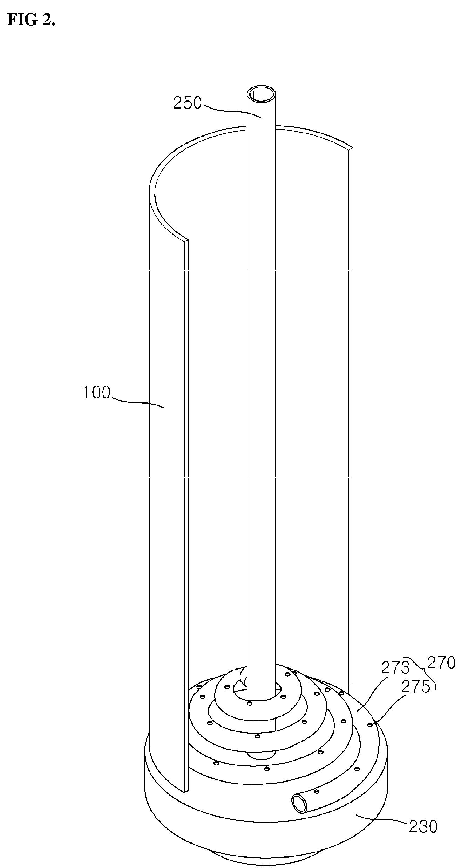

Figure 1 and Figure 2 show a hollow fiber membrane module according to one embodiment of the present disclosure. Referring to Figure 1 and Figure 2, a hollow fiber membrane module may include a housing 100, header portions 210, 230, and a hollow fiber membrane part 300. The hollow fiber membrane module may be provided with an aerator, which includes an air injection pipe 270 to supply bubbles 271 for aeration to the hollow fiber membrane part 300.

The housing 100 constitutes an external appearance of the hollow fiber membrane module and the hollow fiber membrane part 300 is disposed inside the housing 100 and may include a plurality of hollow fiber membranes, which are arranged in the form of bundles. One or both ends of the hollow fiber membrane part 300 may be secured to the header portions 210, 230. For example, an upper header portion 210 and a lower header portion 230 may be fastened to the housing 100 and secure upper and lower ends of the hollow fiber membrane part 300, respectively. The hollow fiber membrane part 300 is disposed inside the housing 100 to which the upper header portion 210 and the lower header portion 230 are fastened, and raw water to be treated may be supplied to the housing 100. The raw water may be purified by the hollow fiber membranes constituting the hollow fiber membrane part 300. Filtered water or purified water having passed through the hollow fiber membrane part 300 may be collected by the upper header portion 210 or the lower header portion 230 connected to the hollow fiber membrane part 300. The upper and lower header portions 210, 230 may act as members for collecting filtered water. Accordingly, although not shown in detail, each of the upper header portion 210 and the lower header portion 230 may include a water passage through which water can flow. The upper header portion 210 and the lower header portion 230 may be formed of any material so long as the material has a certain level of mechanical strength and durability.

The filtered water collected by the lower header portion 230 is transferred to the upper header portion 210 through a transfer pipe 250, which may be disposed inside the housing 100 and connect the upper header portion 210 to the lower header portion 230, as shown in Figure 2. The transfer pipe 250 may be disposed at an inner center of the housing 100. With the structure wherein the transfer pipe 250 is disposed inside the housing 100, the hollow fiber membrane module according to the embodiment does not require installation of a separate water transfer pipe outside the housing 100 to transfer the filtered water from the lower header portion 230 to the upper header portion 210. With this structure, the external appearance of the housing 100 can be more simply designed, thereby enabling elimination of a complicated pipe in installation of the hollow fiber membrane module or installation of a purifying or filtering system including the hollow fiber membrane module. Since the hollow fiber membrane module according to this embodiment can collect filtered water at both ends of the hollow fiber membrane part 300, it is possible to achieve effective increase in productivity of filtered water.

Referring again to Figure 1, in order to remove contaminants from the hollow fiber membrane part 300, the hollow fiber membrane module according to this embodiment may include the air injection pipe 270 constituting an aerator inside the housing 100. The aerator including the air injection pipe 270 serves to provide aeration effects of separating contaminants from the hollow fiber membrane part 300 by blowing air thereto. Bubbles 271 generated by air blowing may be provided to the hollow fiber membrane part 300 inside the housing 100 through pores 275 formed on a pipe body 273 of the air injection pipe 270. The bubbles 271 serve to perform aeration or air diffusion operation around the hollow fiber membrane part 300 such that contaminants created on the hollow fiber membrane part 300 can be separated and removed therefrom by fluid flow resulting from the aeration or air diffusion operation of the bubbles. The contaminants can be discharged from the housing 100 together with condensate water or contaminated water, which is produced by filtration of raw water.

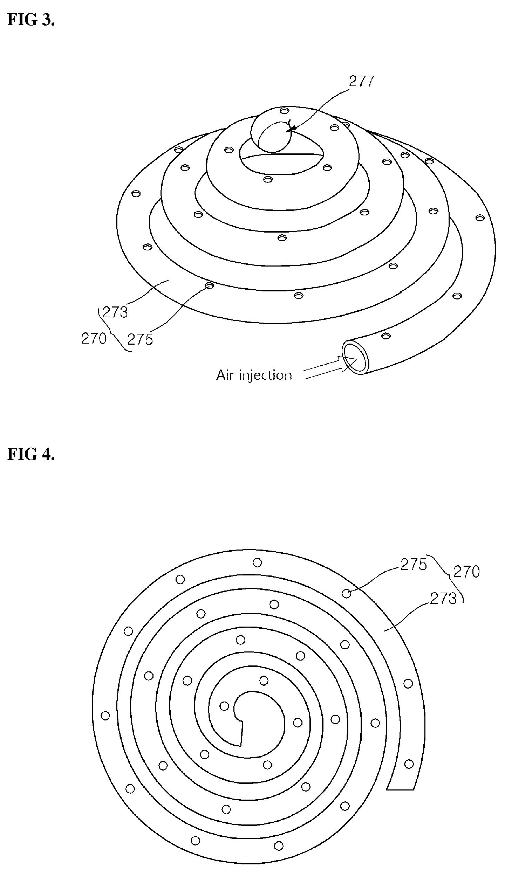

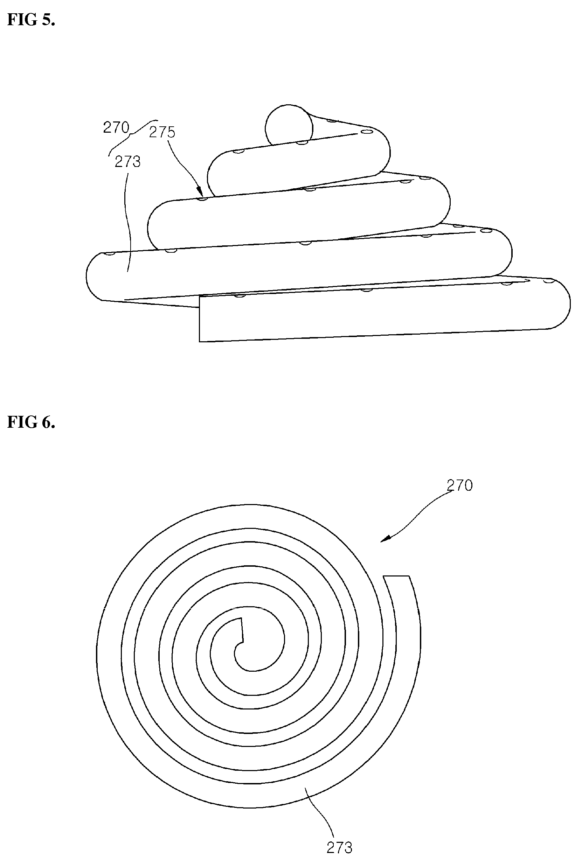

As shown in Figure 3, the pipe body 273 of the air injection pipe 270 may be wound in a spiral shape. The pipe body 273 may have a conical shape, for example, a conical spiral shape, in which a distal end 277 of the pipe body 273 opposite to an inlet of the air injection pipe to which air is injected is disposed at the center of the spiral shape and has a higher height than other portions thereof. Figure 3 is a perspective view of one example of the air injection pipe 270, the pipe body 273 of which is wound in a spiral shape, Figure 4 is a top view of one example of the air injection pipe, Figure 5 is a side view of one example of the air injection pipe, and Figure 6 is a bottom view of one example of the air injection pipe. Figure 3 to Figure 6 show the air injection pipe 270 wound in a conical spiral shape.

### [Mode for Invention]

Hereinafter, embodiments of the present disclosure will be described in detail with reference to the accompanying drawings. The following embodiments are provided by way of example so as to fully convey the spirit of the present disclosure to those skilled in the art to which the present disclosure pertains. Accordingly, the present disclosure is not limited to the embodiments disclosed herein and can also be implemented in different forms. In the drawings, widths, lengths, thicknesses, and the like of elements can be exaggerated for clarity and descriptive purposes. It will be understood that when an element is referred to as being "on" another element, it can be directly on the other element or intervening elements may also be present. Throughout the specification, like reference numerals denote like elements having the same or similar functions. As used herein, the singular forms "a," "an," and "the" may be intended to include the plural forms as well, unless context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. As used herein, spatially relative terms such as "upper" and "lower" are defined with reference to the accompanying drawings, and can be used interchangeably. As used herein, the "hollow fiber membrane module" means an apparatus including a hollow fiber membrane part and an aerator, may have various shapes, and may further include additional features constituting a filtering apparatus including hollow fiber membranes.

Referring again to Figure 1 and Figure 2, the hollow fiber membrane module includes a housing 100, header portions 210, 230, a hollow fiber membrane part 300, and an aerator including an air injection pipe 270 for supplying bubbles 271 for aeration. The hollow fiber membrane part 300 is disposed inside the housing 100 constituting an external appearance of the hollow fiber membrane module, and may include a plurality of hollow fiber membranes, which are arranged in the form of bundles.

The hollow fiber membranes constituting the hollow fiber membrane part 300 may be formed of a material capable of filtering raw water that requires water treatment or purification. The hollow fiber membranes may be formed of polyolefin, polysulfone, polyethersulfone, polyimide, polyether imide, cellulose, cellulose acetate, polyvinyl alcohol, polyamide, polyethylene, polyethylene fluoride, polyvinylidene fluoride, polyacrylonitrile, polypropylene, polymethyl methacrylate, polytetrafluoroethylene, or polyether ketone. The header portions 210, 230, that is, the upper header portion 210 and the lower header portion 230, may be formed of, for example, polyvinyl chloride, polyolefin, polycarbonate, polysulfone, acrylic, acrylonitrile butadiene styrene (ABS), modified PPE (polyphenylene ether) resins, and the like.

The air injection pipe 270 may be disposed near the lower header portion 230 such that pores 275 of the air injection pipes 270 are open towards the upper header portion 210. Bubbles 271 created by the pores 275 are moved from a lower end of the housing 100 to an upper end thereof while removing contaminants from the hollow fiber membrane part 300. The air injection pipe 270 may be securely fastened to the lower header portion 230 by a bonding agent or the like. Alternatively, the pipe body 273 of the air injection pipe 270 may be provided to an intermediate portion or an upper end of the housing 100 within the housing 100 in order to provide further improved aeration effects. In a structure wherein the pipe body 273 is provided to the intermediate portion of the housing 100, the pores 275 may be formed on the pipe body to be open upwards or downwards. In a structure wherein the pipe body 273 is disposed near the upper end of the housing 100 within the housing 100, the pores 275 may be formed on the pipe body to be open towards the lower header portion 210. In some embodiments, a plurality of pipe bodies 273 may be disposed in plural layers within the housing 100 to provide further improved aeration effects.

Referring again to Figure 1 and Figure 3, the pores 275 may be arranged at constant intervals in a predetermined pattern along the pipe body 273, or may be irregularly arranged along the pipe body 273. The pores 275 may have a size of about 2 mm to 15 mm. In one embodiment, the pores 275 may be arranged substantially at constant intervals of, for example, about 20 mm to 100 mm. In another embodiment, the pores 275 may be arranged on the pipe body such that a separation distance between the pores 275 gradually decreases with increasing distance from the inlet of the air injection pipe to which air is injected, that is, from an edge of the pipe body to the center thereof. For example, the pores 275 may be arranged at an interval of about 60 mm to about 100 mm near the edge of the pipe body, and may be arranged at an interval of about 20 mm to about 60 mm near the center of the pipe body. The separation distance between the pores 275 gradually decreases and the density of the pores 275 gradually increases with decreasing distance to the center of the pipe body such that bubbles 271 can be more efficiently supplied to the center of the hollow fiber membrane part 300, thereby providing further improved aeration effects.

Alternatively, the pores 275 may be separated from each other or may be gathered in groups of pores.

As shown in Figure 2, since the pipe body 273 of the air injection pipe 270 has a spiral shape, the entirety of a bottom of the housing 100 can be covered by a single pipe body 273. Air injected into one inlet of the pipe body 273 flows into the pores 275 formed on the pipe body 273 through the pipe body 273. Accordingly, it is sufficient for a single pipe body 273 to supply bubbles 271 to the entirety of the hollow fiber membrane part 300 disposed inside the housing 100, as shown in Figure 1. Furthermore, the pipe body 273 wound in the spiral shape may provide a structure wherein a portion of the pipe body 273 placed at a central portion of the housing 100 is higher than other portions thereof. Since the pipe body 273 of the air injection pipe 270 may be wound in a spiral shape in which a distal end 277 of the pipe body 273 is placed at the central portion of the pipe body 273 as shown in Figure 3, the height of the pipe body 273 gradually decreases from the central portion of the housing 100, at which the distal end 277 of the pipe body 273 is placed, to an outer circumference of the housing 100, as shown in Figure 1 and Figure 2. With this structure, the hollow fiber membrane module can effectively supply bubbles 271 to the hollow fiber membranes disposed at the center of the hollow fiber membrane part 100, which is disposed at the central portion of the housing 100. Accordingly, the hollow fiber membrane module can effectively remove contaminants caused by aeration operation.

Since the pipe body 273 of the air injection pipe 270 is wound in a spiral shape, individual hollow fiber membranes or bundles of hollow fiber membranes may be connected to the lower header portion 210 through a space between one portion of the pipe body 273 and another portion thereof. Since the pipe body 273 may be interposed between the hollow fiber membranes, the pores 275 are also placed between the hollow fiber membranes and guide the bubbles 271 to be more effectively supplied to the individual hollow fiber membranes. With this structure, the hollow fiber membrane module can further improve aeration effects.

Referring again to Figure 1, although the hollow fiber membrane module according to this embodiment has been described as having a function of collecting filtered water at both ends of the hollow fiber membrane part 300, hollow fiber membrane modules according to other embodiments of the present invention may collect filtered water only at one end of the hollow fiber membrane part 300, for example, by the upper header portion 210 fastened to the upper end of the housing. The hollow fiber membrane module may further include a circulation system for supplying, withdrawing or circulating raw water and condensate water. For example, the hollow fiber membrane module may further include a drive unit such as a pump, which is connected to supply pipes, withdrawal pipes or circulation pipes. In addition, the hollow fiber membrane module may further include a pipe or a pump for extracting filtered water. The hollow fiber membrane module may be further provided at a side of the lower end of the housing 100 with a raw water supply port (not shown), and at a side of the upper end of the housing opposite to the side of the lower end with an condensate water discharge port. Since the air injection pipe 270 may be disposed inside the housing 100 regardless of a raw water supply position, formation of the raw water supply port can be achieved with high freedom of design, thereby allowing the housing 100 to have a more simple appearance.

Although some embodiments have been described herein, it should be understood by those skilled in the art that various modifications, variations and alterations can be made without departing from the spirit and scope of the present disclosure set forth in the accompanying claims.

### [Industrial Applicability]

A spiral aerator and a hollow fiber membrane module according to the present disclosure can be applied to various types of water treatment such as water purification and treatment of industrial water, re-used water, waste water, and the like.

## Claims

1. A hollow fiber membrane module comprising:
a housing;
a hollow fiber membrane part disposed inside the housing; and
an air injection pipe having a plurality of pores formed along a pipe body thereof to supply bubbles to the hollow fiber membrane part, the pipe body being wound in a spiral shape.

2. The hollow fiber membrane module according to claim 1, further comprising: a header securing the hollow fiber membrane part.

3. The hollow fiber membrane module according to claim 2, wherein the hollow fiber membrane part comprises a plurality of hollow fiber membranes,
the hollow fiber membranes being connected to the header through a space between one portion of the pipe body wound in the spiral shape and another portion of the pipe body.

4. The hollow fiber membrane module according to claim 3, wherein the header comprises an upper header portion and a lower header portion securing upper and lower ends of the hollow fiber membrane part, respectively.

5. The hollow fiber membrane module according to claim 4, wherein the air injection pipe is placed near the lower header portion and the pores are open towards the upper header portion.

6. The hollow fiber membrane module according to claim 4, further comprising:
a transfer pipe transferring filtered water collected by the lower header portion to the upper header portion such that the filtered water is drawn into the upper header portion.

7. The hollow fiber membrane module according to claim 6, wherein the transfer pipe is disposed inside the housing and connects the lower header portion and the upper header portion to each other.

8. The hollow fiber membrane module according to claim 7, wherein the air injection pipe comprises the pipe body wound in the spiral shape about the transfer pipe.

9. The hollow fiber membrane module according to claim 1, wherein the pores of the air injection pipe are arranged at constant intervals along the pipe body.

10. The hollow fiber membrane module according to claim 1, wherein the pores of the air injection pipe are arranged at gradually decreasing intervals with increasing distance from an inlet of the air injection pipe to which air is injected.

11. The hollow fiber membrane module according to claim 1, wherein the pores of the air injection pipe are irregularly arranged.

12. The hollow fiber membrane module according to claim 1, wherein the air injection pipe comprises the pipe body wound in the spiral shape in which a distal end of the pipe body is placed at a central portion of the housing inside the housing and a height of the pipe body gradually decreases from the central portion of the housing to an outer circumference thereof.

13. An aerator hollow comprising an air injection pipe having a plurality of pores formed along a pipe body thereof to supply bubbles to a hollow fiber membrane part, the pipe body being wound in a spiral shape.

14. The aerator according to claim 13, wherein the air injection pipe has a spiral shape in which a distal end of the pipe body of the air injection pipe is placed at a central portion of the housing inside the housing and a height of the pipe body gradually decreases from the central portion of the housing to an outer circumference thereof.
